# EUROPEAN PATENT APPLICATION

(11) **EP 4 708 656 A1**
(43) Date of publication of application: **11.03.2026**
(21) Application number: 25194047.4
(22) Date of filing: 05.08.2025
(51) Int. Cl.: H02M 1/42, H02M 1/44, H02M 1/12, H02M 7/219

(54) **A BRIDGELESS POWER FACTOR CORRECTION CIRCUIT FOR REDUCING ELECTROMAGNETIC INTERFERENCE**

(30) Priority: 21.08.2024 US 202463685477 P; 30.07.2025 US 202519285076
(71) Applicant: Power Integrations, Inc., San Jose, CA 95138 (US)
(72) Inventor: Werner, Antonius Jacobus Johannes, Cambridge, CB5 8XP (GB); Yan, Xingda, Ely, CB6 2FT (GB)
(74) Representative: Fish & Richardson P.C.

(57) **Abstract**

A bridgeless power factor correction (PFC) circuit for reducing electromagnetic interference (EMI) is disclosed herein. A current source is placed in parallel with a switch of a low frequency leg. The current source may be turned on during zero crossings of the AC input voltage to limit current and reduce the rate of change in voltage. In turn, EMI may be advantageously reduced without the need for large passive filters or complicated circuitry.

## Description

### CROSS-REFERENCE TO RELATED APPLICATION(S)

This application claims the priority of U.S. Provisional Application No. 63/685,477, filed on August 21, 2024.

### BACKGROUND INFORMATION

### Field of the Disclosure

The present invention relates to bridgeless power factor correction (PFC), and more specifically to bridgeless PFC circuitry for reducing electromagnetic interference.

### Background

In an alternating current (AC) electric power system, power factor, a ratio having a value between zero and one, is a measure of how well AC power is delivered from the AC power grid to a load. As power factor increases the load demands less overall current and wastes less energy. In turn, costs and equipment associated with energy demand are reduced.

Accordingly, many power supplies include some form of power factor correction (PFC), often a PFC stage (i.e., a PFC converter) placed as a front-end stage immediately following an AC rectifier (diode) bridge. Following the PFC stage may be a regulated direct current to direct current (DC to DC) stage such as a buck, LLC, flyback or boost converter. During operation the PFC shapes input current to be in phase with instantaneous AC input voltage thereby increasing power factor.

A special class of PFC converters, referred to as bridgeless PFC converters, exclude the AC rectifier bridge with the goal of reducing cost and improving converter efficiency. By omitting the AC rectifier bridge, losses associated with the AC rectifier bridge diodes may effectively be eliminated. Therefore, there is great interest in developing bridgeless PFC stages and bridgeless PFC circuitry.

### Summary of the Disclosure

Unfortunately, bridgeless PFC converters exhibit higher electromagnetic interference (EMI) compared to PFC converters with AC rectifier bridges. EMI generated due to zero-cross transitions of the AC input may deleteriously interfere with neighboring electronic components, feedback to the AC grid, and degrade regulation. Therefore, there is a need to develop bridgeless PFC circuits and circuitry which operate with lower EMI.

This disclosure presents bridgeless PFC circuits to address EMI which occurs during AC zero crossing of the AC input. A bridgeless PFC stage often includes a low-frequency leg and a high-frequency leg. Novel circuitry is introduced into the low-frequency leg to slew (i.e., slow down) voltage transitions. Current sources are included with switches in the low frequency leg so that during the AC zero crossings, a current source conducts (i.e., is turned on) while the switches block (i.e., are turned off).

### BRIEF DESCRIPTION OF THE DRAWINGS

Non-limiting and non-exhaustive embodiments of a bridgeless power factor correction (PFC) circuit for reducing electromagnetic interference (EMI) are described with reference to the following figures, wherein like reference numerals refer to like parts throughout the various views unless otherwise specified.
**FIG. 1** illustrates an alternating current to direct current (AC to DC) power converter 100 incorporating a totem pole power factor correction (PFC) circuit according to an aspect of the present disclosure.
**FIG. 2** illustrates a bridgeless power factor correction (PFC) circuit according to an aspect of the present disclosure.
**FIG. 3** illustrates voltage waveforms.
**FIG. 4A** illustrates a bridgeless PFC circuit according to an aspect of the present disclosure.
**FIG. 4B** illustrates a bridgeless PFC circuit according to another embodiment of the present disclosure.
**FIG. 4C** illustrates a bridgeless PFC circuit according to another embodiment of the present disclosure.
**FIG. 4D** illustrates a bridgeless PFC circuit according to another embodiment of the present disclosure.
**FIG. 4E** illustrates a bridgeless PFC circuit according to another embodiment of the present disclosure.
**FIG. 5** illustrates a current source according to an aspect of the present disclosure.
**FIG. 6A** illustrates signal waveforms according to an aspect of the present disclosure.
**FIG. 6B** illustrates signal waveforms according to another aspect of the present disclosure.
**FIG. 6C** illustrates signal waveforms according to another aspect of the present disclosure.
**FIG. 6D** illustrates signal waveforms according to another aspect of the present disclosure.
**FIG. 6E** illustrates signal waveforms according to another aspect of the present disclosure.
**FIG. 7** compares experimental waveforms of bridgeless PFC circuits according to the teachings herein.
**FIG. 8** compares electromagnetic emissions waveforms of the bridgeless PFC circuits of FIG. 7.
**FIG. 9** illustrates a conceptual flow diagram of a method for reducing EMI in a bridgeless PFC converter according to the teachings herein.
**FIG. 10** illustrates a power converter according to an embodiment of the present disclosure.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the teachings herein. Also, common but well-understood elements that are useful or necessary in a commercially feasible embodiment are often not depicted in order to facilitate a less obstructed view of these various embodiments of a bridgeless power factor correction (PFC) circuit for reducing electromagnetic interference (EMI).

### DETAILED DESCRIPTION

In the following description, numerous specific details are set forth in order to provide a thorough understanding of a bridgeless power factor correction (PFC) circuit for reducing electromagnetic interference (EMI). It will be apparent, however, to one having ordinary skill in the art that the specific detail need not be employed to practice the teachings herein. In other instances, well-known materials or methods have not been described in detail in order to avoid obscuring the present disclosure.

Reference throughout this specification to "one embodiment", "an embodiment", "one example" or "an example" means that a particular feature, structure, or characteristic described in connection with the embodiment or example is included in at least one embodiment bridgeless power factor correction (PFC) circuit for reducing electromagnetic interference (EMI). Thus, appearances of the phrases "in one embodiment", "in an embodiment", "one example" or "an example" in various places throughout this specification are not necessarily all referring to the same embodiment or example. Furthermore, the particular features, structures or characteristics may be combined in any suitable combinations and/or subcombinations in one or more embodiments or examples. Particular features, structures or characteristics may be included in an integrated circuit, an electronic circuit, a logic circuit, or other suitable components that provide the described functionality. In addition, it is appreciated that the figures provided herewith are for explanation purposes to persons ordinarily skilled in the art and that the drawings, including waveforms and graphs, are not necessarily drawn to scale.

In the context of the present application, when a transistor is in an "off-state" or "off" the transistor blocks current and/or does not substantially conduct current. Conversely, when a transistor is in an "on-state" or "on" the transistor is able to substantially conduct current. By way of example, in one embodiment, a high-voltage transistor comprises an N-channel metal-oxide-semiconductor (NMOS) field-effect transistor (FET) with the high-voltage being supported between the first terminal, a drain, and the second terminal, a source.

As discussed above, there is an interest in developing bridgeless PFC stages as they omit the traditional AC rectifier bridges for AC to DC conversion thereby improving efficiency. Types of bridgeless PFC stages include totem pole PFC stages and as described herein, have high frequency legs (circuit paths) and low frequency legs (circuit paths).

Although the bridgeless PFC stage may allow the omission of an AC rectifier bridge, it is susceptible to electromagnetic interference (EMI) due, in part, to a floating ground. As discussed herein, due to the bridgeless PFC configuration, the placement of high frequency and low frequency legs gives rise to a neutral ground that electrically floats relative to the AC input. Thus, any parasitic capacitance between neutral ground and earth ground may contribute to common mode EMI. For instance, during zero cross transitions of the AC input voltage, there may be large variation in circuit node voltages (i.e., large variations in a voltage time derivative dV/dt). In turn, the large voltage rate of change may cause EMI (i.e., common mode EMI) due, at least in part, to parasitic capacitance between neutral ground and earth ground.

EMI and common mode EMI are problematic in that EMI may interfere with system operation and with neighboring electronics. Unfortunately, traditional approaches to mitigating EMI, including the use of passive filters at the AC input, become undesirable and untenable due to cost and size. Accordingly, there is a need to develop new ways to mitigate EMI in bridgeless PFC stages.

A bridgeless power factor correction (PFC) circuit for reducing electromagnetic interference (EMI) is disclosed herein. A current source is placed in parallel with a switch of the low frequency leg. The current source may be turned on during zero crossings of the AC input voltage to limit current and reduce the rate of change in voltage. In turn, EMI may be advantageously reduced without the need for large passive filters or complicated circuitry.

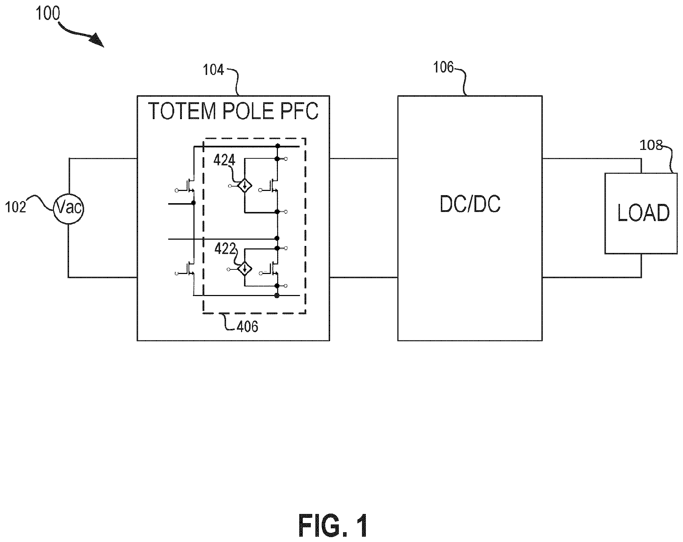

**FIG. 1** illustrates an alternating current to direct current (AC to DC) power converter 100 incorporating a totem pole power factor correction (PFC) circuit 104 according to an aspect of the present disclosure. Totem pole PFC circuit 104 receives an alternating current (AC) voltage Vac from a power supply 102 and is electrically coupled to a direct current to direct current (DC to DC) converter 106. The DC-to-DC converter 106 receives power from the totem pole PFC circuit 104 and provides direct current (DC) output power to a load 108.

Power supply 102 may be a typical "mains." For instance, power supply 102 may supply an ac voltage Vac of 120 Volts AC (VAC) 60 Hertz (Hz) as available to homes and offices in the United States, and/or 240 VAC, 50 Hz, as available to other parts of the world. Totem pole PFC circuit 104 includes a leg 406 and current sources 422, 424. According to the teachings herein, the current sources 422, 424 may be controlled to reduce the time derivative of voltage (dV/dt) on the AC neutral so as to minimize currents due to parasitic capacitance in leg 406.

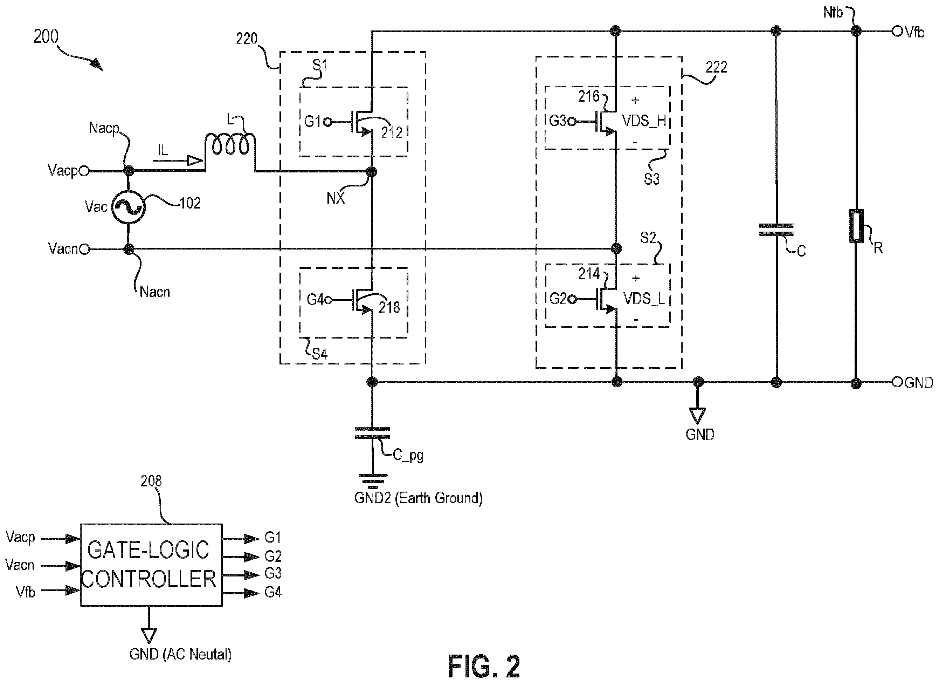

**FIG. 2** illustrates a bridgeless power factor correction (PFC) circuit 200 according to an aspect of the present disclosure. Bridgeless PFC circuit 200 receives ac input voltage Vac between a positive input node Nacp and a negative input node Nacn and provides a regulated voltage Vfb at node Nfb. Voltage Vacp is the voltage at positive input node Nacp relative to neutral ground GND; and voltage Vacn is the voltage at negative input node Nacn relative to neutral ground GND. Capacitor C_pg represents parasitic capacitance between neutral ground GND and earth ground GND2. Additionally, capacitor C and resistor R, representing the loading at node Nfb, are electrically connected between node Nfb and neutral ground GND.

Bridgeless PFC circuit 200 includes a leg 220 and a leg 222. Leg 220 includes switch S1 and switch S4. Switch S1 comprises an N-channel field effect transistor (NFET) 212; and switch S4 comprises an NFET 218. As illustrated, the source of NFET 212 is electrically coupled to the drain of NFET 218 at node NX. NFET 212 receives a gate drive signal G1, and NFET 218 receives a gate drive signal G4.

Leg 222 includes switch S3 and switch S2. Switch S3 comprises an NFET 216; and switch S2 comprises an NFET 214. As illustrated, the source of NFET 216 is electrically coupled to the drain of NFET 214 at negative input node Nacn. Voltage VDS_H, the voltage across switch S3, is the drain-to-source voltage of NFET 216; and voltage VDS_L, the voltage across switch S2, is the drain-to-source voltage of NFET 214. NFET 214 receives a gate drive signal G2, and NFET 216 receives a gate drive signal G3.

Although switches S1, S2, S3, S4 are respectively realized using (i.e., comprise) NFETs 212, 214, 216, 218, other configurations are possible. For instance, as one of skill in the art may appreciate, switches S1-S4 may be realized using (i.e., comprising) other devices, transistors, diodes, and/or circuit elements instead of or in addition to those shown without departing from the scope of the present disclosure.

Also, as illustrated, leg 220 and leg 222 are electrically coupled between node Nfb and neutral ground GND; and inductor L is electrically coupled between positive input node Nacp and leg 220 at node NX. Inductor current IL is the current flowing in (across) inductor L.

FIG. 2 also shows a gate logic controller 208 that receives voltage Vacp, voltage Vacn, and feedback voltage Vfb. Gate logic controller 208 also provides gate drive signals G1-G4 to control switches S1-S4, respectively. Gate drive signals G1-G4 may be provided or exerted so that NFETs 212, 214, 216, 218 operate as gated switches. Additionally, the gate drive signals G1-G4 may be provided so as to regulate voltage Vfb at node Nfb with respect to neutral GND.

As discussed above, resistor R, electrically coupled with capacitor C between node Nfb and neutral ground GND, may represent and/or model a load (i.e., the loading) at node Nfb. As one may appreciate, the loading at node Nfb may be due to both active and passive elements; therefore, the resistance of resistor R may, in general, have both linear and nonlinear components.

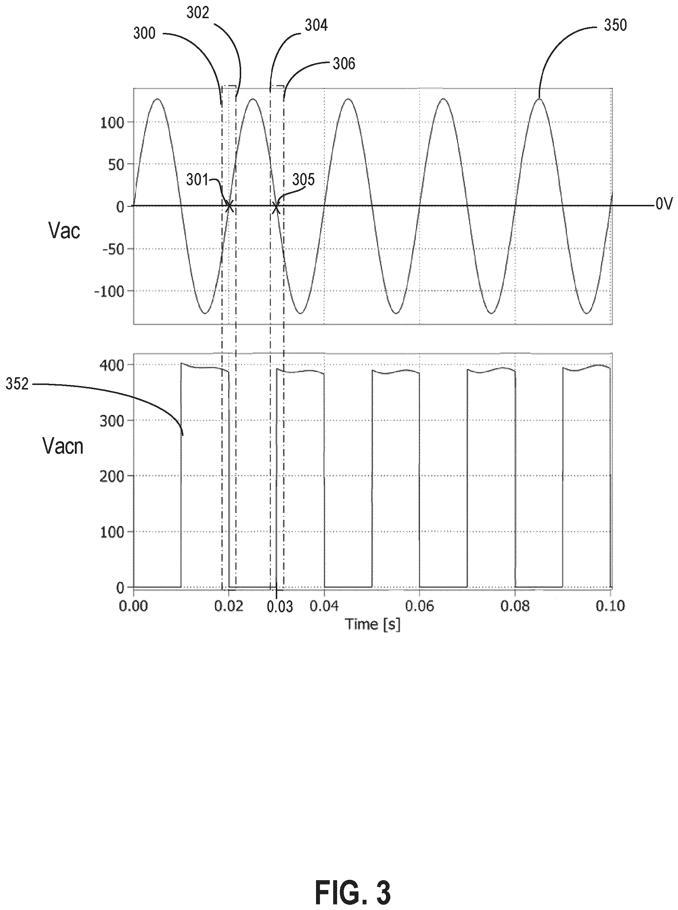

**FIG. 3** illustrates waveforms 350 and 352 of AC input voltage Vac and voltage Vacn, respectively, of bridgeless PFC circuit 200. Waveforms 350, 352 are illustrated as a function of time from zero seconds (0.0s) to zero point one seconds (0.1s). As shown by waveform 350, AC input voltage Vac may be sinusoidal (e.g., a sine wave) and vary between negative one-hundred twenty volts AC (-120 VAC) and one-hundred twenty volts AC (120 VAC).

AC zero crossings may occur when waveform 350 intersects zero volts (0V). For instance, a zero crossing 301 may occur at zero-point-zero-two seconds (0.02s) between time 300 and time 302 when waveform 350 intersects zero volts; and a zero crossing 305 may occur at zero-point-zero-three seconds (0.03s) between time 304 and time 306.

As illustrated by waveform 352, voltage Vacn exhibits large variations with rapid low-to-high and/or high-to-low transitions occurring with zero crossings of the AC input voltage Vac. For instance, waveform 352 makes a relatively fast transition from high to low at or near 0.02s (during zero crossing 301) and makes a relatively fast transition from low to high at or near 0.03s (during zero crossing 305). Thus, at the zero crossings (e.g., zero crossings 301, 305), the rate of change in voltage with respect to time (dv/dt, or "slew" of the signal) of waveform 352 may be relatively high and give rise to common mode EMI.

According to the teachings herein, the behavior of voltage Vacn during AC zero crossings of AC input voltage Vac may be improved by including current sources in parallel with switches S2 and S3 of leg 222 to introduce slew. The current sources may be turned on during the zero crossings of AC input voltage Vac so that waveform transitions are better controlled (i.e., not as fast) and so that EMI may be reduced.

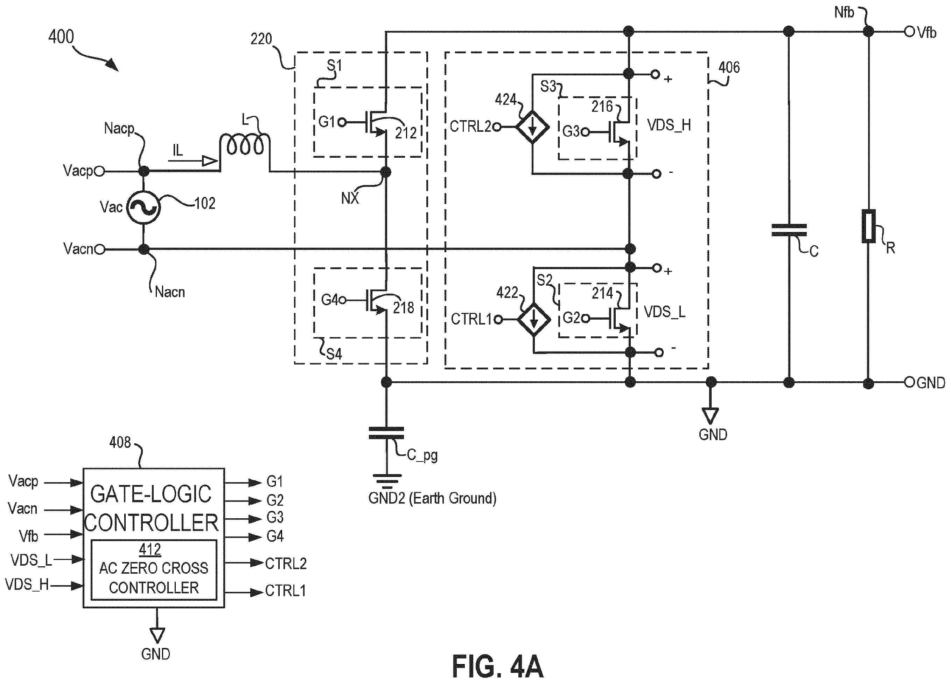

**FIG. 4A** illustrates a bridgeless PFC circuit 400 according to an aspect of the present disclosure. Like bridgeless PFC circuit 200, bridgeless PFC circuit 400 receives AC input voltage Vac between a positive input node Nacp and a negative input node Nacn. However, unlike bridgeless PFC circuit 200, bridgeless PFC circuit 400 includes a leg 406, instead of leg 222, and uses gate logic controller 408, instead of gate logic controller 208. Leg 406 is like leg 222, except in addition to switch S2 and switch S3, leg 406 also includes current source 422 and current source 424.

As illustrated current source 424 may be electrically coupled between node Nfb and negative input node Nacn in parallel with switch S3 between the drain and source of NFET 216. Current source 424 may be controlled (e.g., switched on and off) by control voltage CTRL2, and in response to control voltage CTRL2, may provide (e.g., source) a current at negative input node Nacn. According to the teachings herein, the current provided by current source 424 may be tailored to mitigate and/or reduce EMI by reducing the rate of change of voltage Vacn.

Additionally, current source 422 may be electrically coupled between negative input node Nacn and neutral ground GND in parallel with switch S2 between the drain and source of NFET 214. Current source 422 may be controlled (e.g., switched on and off) by control voltage CTRL1, and in response to control voltage CTRL1, may provide (e.g., sink) a current at negative input node Nacn. According to the teachings the current provided by current source 422 may be tailored to mitigate and/or reduce EMI by reducing the rate of change of voltage Vacn.

Gate logic controller 408 is like gate logic controller 208 in that it provides gate drive signals G1-G4 to switches S1-S4, respectively, to regulate feedback voltage Vfb. However, unlike gate logic controller 208, gate logic controller 408 includes an AC zero crossing controller 412 and also receives and provides additional signals. In addition to receiving voltage Vacp, voltage Vacn, and feedback voltage Vfb, gate logic controller 408 also receives voltage VDS_L, the voltage across switch S2, and voltage VDS_H, the voltage across switch S3. Also, in addition to providing gate drive signals G1-G4, gate logic controller 408 also provides control voltage CTRL1 to current source 422 and control voltage CTRL2 to current source 424.

AC zero crossing controller 412 may receive and monitor voltage VDS_L, voltage VDS_H, and gate drive signals G2, G3. In response, AC zero crossing controller 412 may provide control voltage CTRL1 to current source 422 and control voltage CTRL2 to current source 424. Control voltage CTRL1 and control voltage CTRL2, may be generated by AC zero crossing controller 412 based, at least in part, on voltage VDS_L and voltage VDS_H and also based, at least in part, on gate drive signals G2, G3.

As discussed below with regards to signal waveforms, gate drive signals G2, G3 may switch at lower frequency than gate drive signals G1, G4. Since gate drive signals G2, G3 are provided to switches S2, S3 of leg 406 and gate drive signals G1, G4 are provided to switches S1, S4 of leg 222, leg 406 and leg 220 are often respectfully referred to as a low frequency leg 406 and a high frequency leg 222.

Also as discussed below, although FIG. 4A illustrates a bridgeless PFC circuit 400 including just two legs, a high frequency leg 220 and a low frequency leg 406, other configurations are possible.

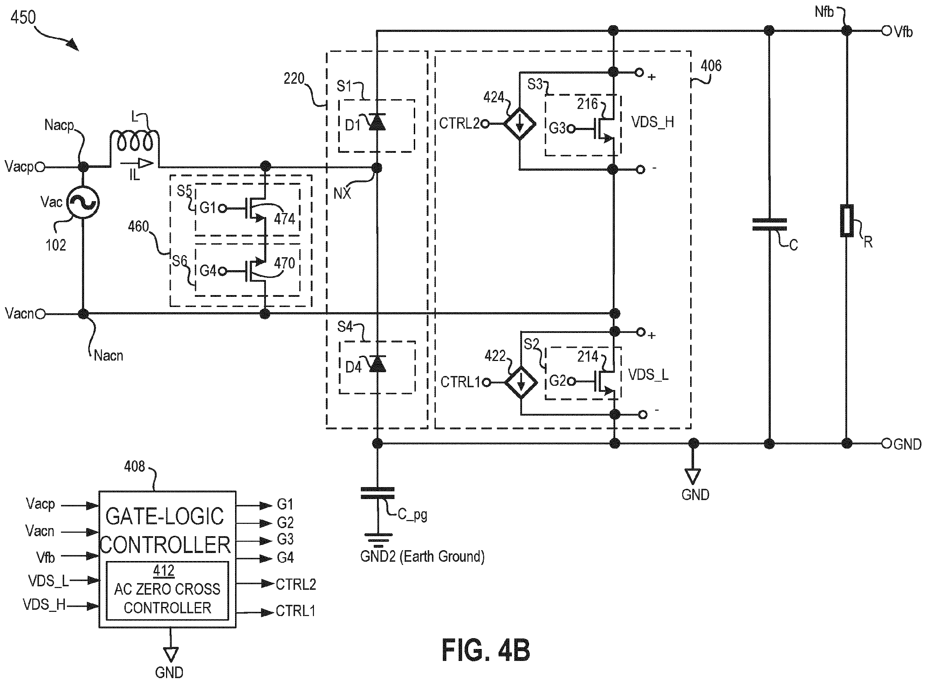

**FIG. 4B** illustrates a bridgeless PFC circuit 450 according to another embodiment of the present disclosure. Bridgeless PFC circuit 450 is like bridgeless PFC circuit 400 except it includes a third leg 460. Third leg 460 includes switch S5 and switch S6 electrically coupled between node NX and negative input node Nacn. Switch S5 comprises an NFET 474, and switch S6 comprises an NFET 470 both electrically connected together in a common-source back-to-back configuration.

As illustrated, the drain of NFET 474 is electrically coupled to node NX and the drain of NFET 470 is electrically coupled to negative input node Nacn. The source of NFET 470 and source of NFET 474 are electrically coupled together. The gate of NFET 474 receives gate drive signal G1, and the gate of NFET 470 receives gate drive signal G4.

Also, unlike that of bridgeless PFC circuit 400, switch S1 comprises a diode D1, instead of an NFET 212, and switch S4 comprises a diode D4, instead of an NFET 218. As illustrated, the cathode of diode D1 is electrically coupled to node Nfb. The anode of diode D4 is electrically coupled to neutral ground GND; and the anode of diode D1 is electrically coupled to the cathode of diode D4.

According to the teachings herein, the operation of bridgeless PFC circuit 450 may be like that of bridgeless PFC circuit 400; therefore, according to the teachings herein, PFC circuit 450 may also exhibit lower EMI due to the presence and control of current sources 422, 424 in low frequency leg 406.

Also, although FIG. 4A and FIG. 4B show switch S2 and switch S3 as comprising NFETs, other configurations are possible. For instance, switch S2 may comprise a diode and/or switch S3 may comprise a diode.

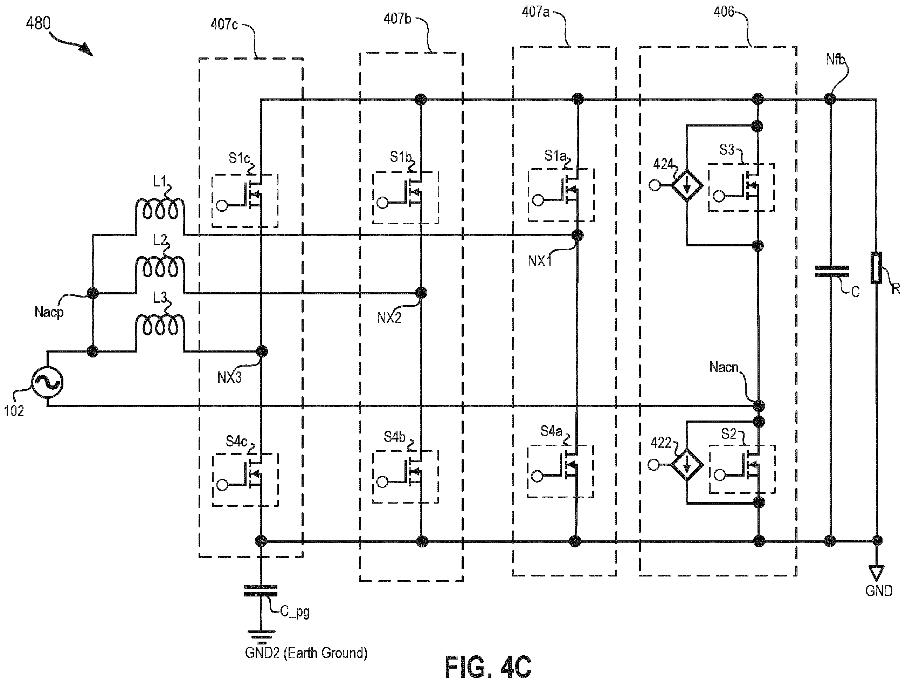

**FIG. 4C** illustrates a bridgeless PFC circuit 480 according to another embodiment of the present disclosure. Like bridgeless PFC circuits 400, 450, bridgeless PFC circuit 480 includes low frequency leg 406 and therefore may avail lower EMI due to the presence and control of current sources 422, 424. Unlike bridgeless PFC circuits 400, 450, bridgeless PFC circuit 480 may also include legs 407a-c, each interleaved and operating with a different phase via one of three inductors L1-L3. Accordingly, bridgeless PFC circuit 480 may also be referred to as a three-phase interleaved totem-pole PFC circuit 480.

As illustrated, inductor L1 is electrically coupled between positive input node Nacp and node NX1 of leg 407a. Inductor L2 is electrically coupled between positive input node Nacp and node NX2 of leg 407b; and inductor L3 is electrically coupled between positive input node Nacp and node NX3 of leg 407c.

Like high frequency leg 407, legs 407a-c each comprise switches. As illustrated, leg 407a includes switches S1a, S4a electrically coupled between node Nfb and neutral ground GND; and both switches S1a, S4a are electrically coupled together at node NX1. Similarly, leg 407b includes switches S1b, S4b electrically coupled between node Nfb and neutral ground GND; and both switches S1b, S4b are electrically coupled together at node NX2. Also, leg 407c includes switches S1c, S4c electrically coupled between node Nfb and neutral ground GND; and both switches S1c, S4c are electrically coupled together at node NX3.

Also, like high frequency leg 407 of bridgeless PFC circuits 400, 450, legs 407a-c may operate at higher frequency than that of leg 406; accordingly, legs 407a-c may also be referred to as high frequency legs 407a-c.

According to the teachings herein, the operation and control of the low frequency leg 406 in bridgeless PFC circuit 480 may be like that of bridgeless PFC circuits 400, 450; and the current provided by current sources 422, 424 may be tailored to mitigate and/or reduce EMI by reducing the rate of change of voltage Vacn.

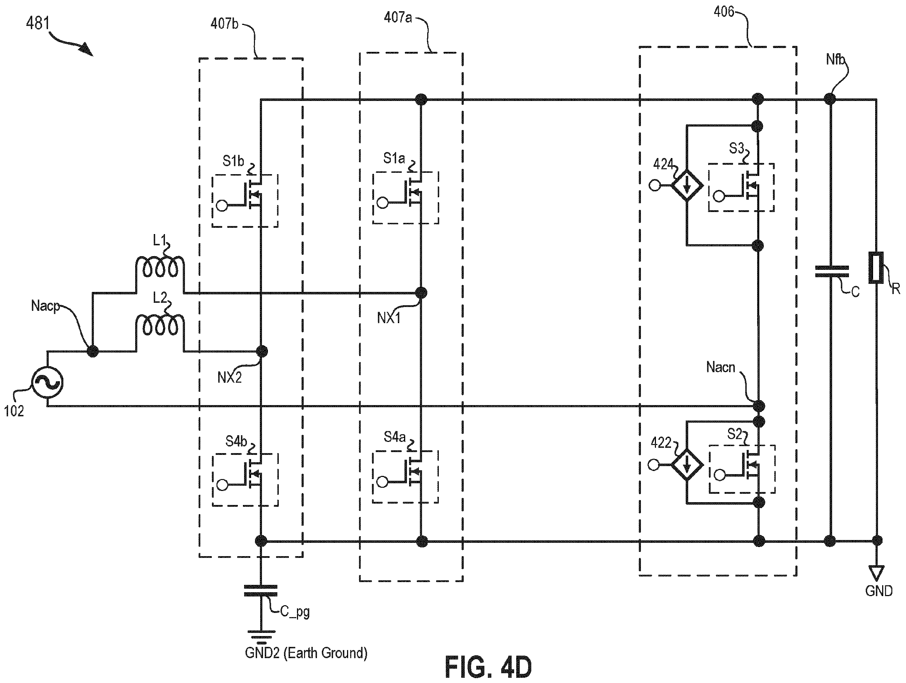

Although bridgeless PFC circuit 480 illustrates an embodiment comprising three high frequency legs 407a-c, other embodiments including greater or fewer than three high frequency legs are possible. For instance, **FIG. 4D** illustrates a bridgeless PFC circuit 481 according to another embodiment of the present disclosure. Bridgeless PFC circuit 481 is like bridgeless PFC circuit 481 except it has two high frequency legs 407a-b and two inductors L1-L2 to operate as a two-phase, rather than three phase, interleaved totem-pole PFC circuit.

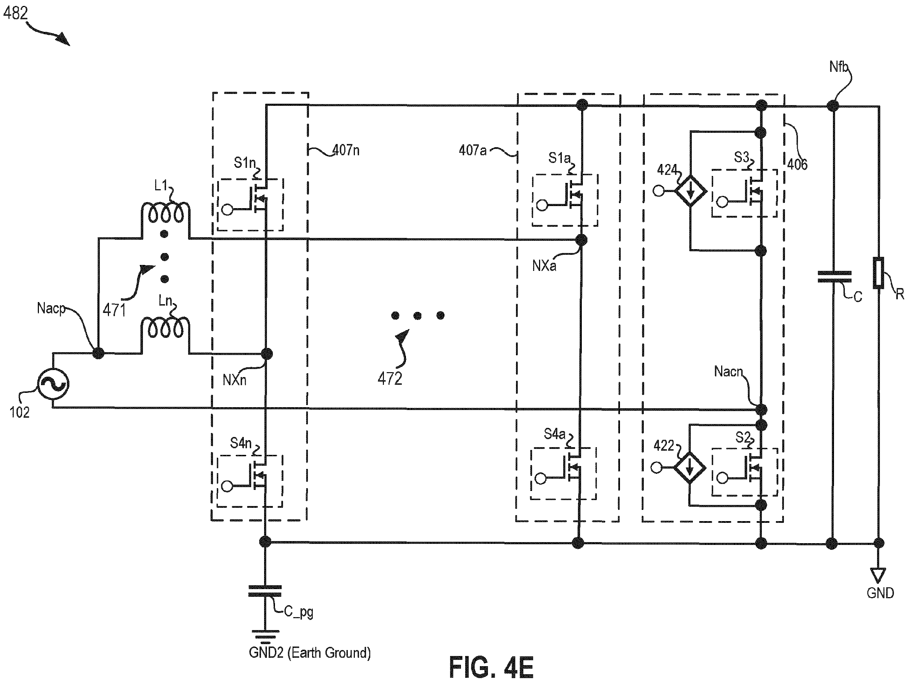

**FIG. 4E** illustrates a bridgeless PFC circuit 482 according to another embodiment of the present disclosure. Bridgeless PFC circuit 482 is like bridgeless PFC circuits 480, 481 in that it has more than one high frequency leg 407a and more than one inductor L1 to operate as a multi-phase interleaved totem-pole PFC circuit. Inductor Ln is coupled between node Nacp and node Nxn of high frequency leg 407n. High frequency leg 407n includes switches S1n, S4n electrically coupled between node Nfb and neutral ground GND; and both switches S1n, S4n are electrically coupled together at node NXn.

The depiction of high frequency leg 407n with node NXn and inductor Ln may conceptually represent multiple (multi) phases. For instance, inductor L1 and inductor Ln separated by ellipsis 471 may signify a plurality of two or more. In this context, if "n" represents an index (i.e., a whole number of at least two), then L1 may represent a first inductor and Ln may represent an "Nth" inductor. Similarly, high frequency leg 407a and high frequency leg 407n separated by ellipsis 472 signify a plurality of two or more. In this context leg 407a may represent a first high frequency leg and leg 407n may represent an "Nth" high frequency leg. Accordingly, bridgeless PFC circuit 482 may be a multi-phase bridgeless PFC circuit of two or more phases, and according to the teachings herein, low frequency leg 406 may mitigate EMI by virtue of current sources 422, 424.

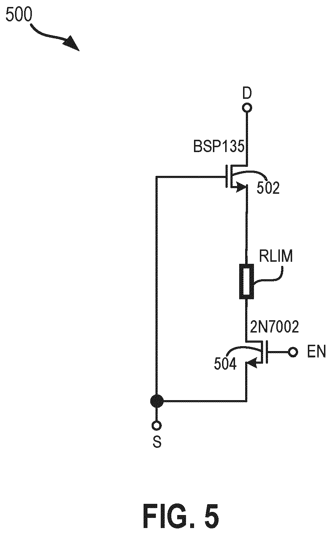

**FIG. 5** illustrates a current source 500 according to an aspect of the present disclosure. Current source 500 includes a depletion mode n-channel field effect transistor (NFET) 502, an enhancement mode field effect transistor (NFET) 504, and a resistor RLIM. Resistor RLIM is electrically connected between the source of NFET 502 and drain of NFET 504. The gate of NFET 502 is electrically connected to the source of NFET 504, and the gate of NFET 504 receives control voltage EN. The drain of NFET 502 is electrically coupled to the upper terminal D of current source 500, and the source of NFET 504 is electrically coupled to the lower terminal S of current source 500.

Current source 500 may be used to realize current source 422 and/or current source 424. For instance, with reference to low frequency leg 406, current source 422 may be realized by current source 500 with upper terminal D connected to the drain of NFET 214 and lower terminal S connected to the source of NFET 214. Also, in this realization the gate of NFET 504 would receive control voltage CTRL1 instead of control voltage EN. Similarly, current source 424 may be realized by current source 500 with upper terminal D connected to the drain of NFET 216 and lower terminal S connected to the source of NFET 216. Also, in this realization the gate of NFET 504 would receive control voltage CTRL2 instead of control voltage EN.

Also as illustrated, depletion mode NFET 502 may be realized with a discrete depletion mode device BSP135 or similar, and NFET 504 may be realized with a discrete enhancement mode device 2N7002 or similar.

When control voltage EN turns NFET 504 on, NFET 502 may also turn on (i.e., operate in the on state) so that the current source 500 provides a current determined by the voltage across resistor RLIM, the depletion mode threshold of NFET 502, the on-state drain-to-source voltage of NFET 504, and the resistance of resistor RLIM. Accordingly, current source 500 operates as a controllable current source by limiting the current through resistor RLIM in response to control voltage EN. Typical values of current may be in the range of one to one-hundred milliamps (1-100mA).

As one of ordinary skill in the art may appreciate, although current source 500 is realized using NFET 502, NFET 504, and resistor RLIM, other realizations, both integrated and discrete, are possible. For instance, current sources 422, 424 may be realized using switched current mirrors with integrated bipolar and/or field effect transistors.

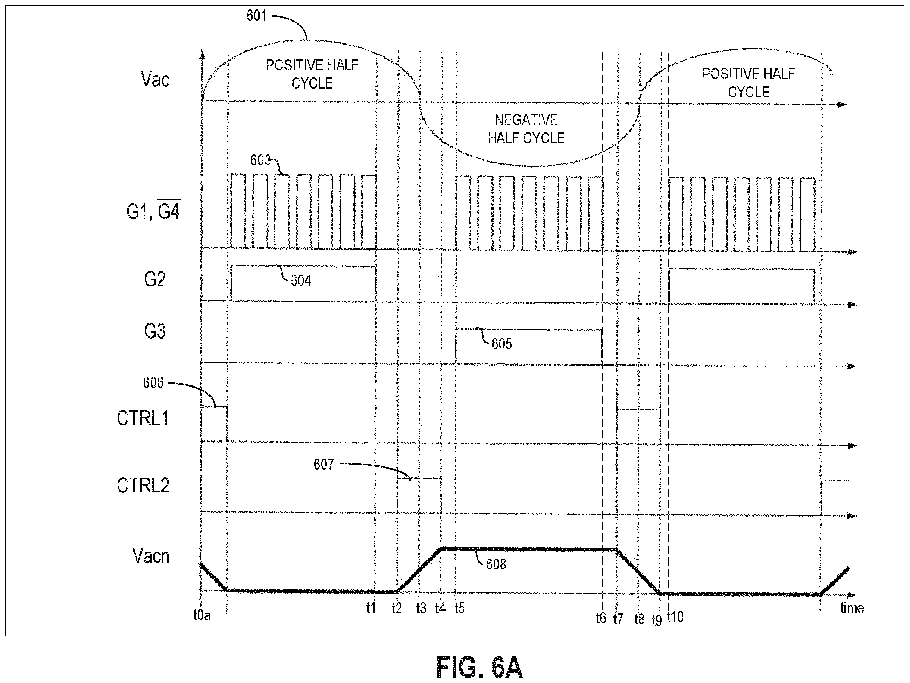

**FIG. 6A** illustrates waveforms 601, 603-608 respectively of AC input voltage Vac, gate drive signal G1, gate drive signal G2, gate drive signal G3, control voltage CTRL1, control voltage CTRL2, voltage Vacn according to an embodiment of the present disclosure. An AC zero crossing occurs at time t0, time t3, and time t8. AC input voltage Vac (waveform 601) exhibits a positive half cycle between time t0 and time t3, a negative half cycle between time t3 and time t8, and another positive half cycle starting at time t8.

As one of skill in the art may appreciate, waveforms 601, 603-608 may not be drawn to scale for presentation purposes. For instance, waveform 603, corresponding with gate drive signal G1, may be drawn with a fixed number of pulses scaled for clarity and not necessarily for accuracy. Also, gate drive signal G1 may be a pulse width modulation (PWM) signal having variable duty cycle. Additionally, gate drive signal G4 may be complementary to gate drive signal G1; therefore, waveform 603 may also correspond with the inverse of gate drive signal G4.

Also, during the positive half cycle (e.g., between time t0 and time t3), gate drive signal G2 (waveform 604) exhibits a single pulse (i.e., turns on and off once). During the negative half cycle (e.g., between time t3 and time t8), gate drive signal G3 (waveform 605) exhibits a single pulse (i.e., turns on and off once).

Thus, the control of leg 406 with gate drive signals G2, G3 may be at the same frequency as AC input voltage Vac; and the control of leg 220 with gate drive signals G1, G4 may be at a frequency higher than that of leg 406. Accordingly, leg 406 may be referred to as a low frequency leg 406, and leg 220 may be referred to as a high frequency leg 220.

According to the teachings herein gate drive signal G2 may turn switch S2 off at time t1 during the positive half cycle of AC input voltage Vac. At time t2, after time t1, control voltage CTRL2 (waveform 607) is exerted high to turn current source 424 on. Current source 424 may provide a fixed current (e.g., ten milliamps (10mA)) from time t2 to time t4. Next at time t3 (an AC zero crossing) switch S2 is blocking (i.e., in the off state) and current source 424 conducts current (e.g., 10mA) such that current is provided (sourced) at node Nacn (see, e.g., FIG 4A-4B). Then at time t4, after the AC zero crossing (time t3), control voltage CTRL2 is exerted low to turn current source 424 off; and at time t5, during a negative half cycle, gate signal G3 may turn switch S3 on.

From time t1, when gate drive signal G2 turns switch S2 off, to time t5, when gate signal G3 turns switch S3 on, may be referred to as a break-before-make interval. During break-before-make interval from time t1 to time t5, both switch s2 and switch s3 are blocking (off). Similarly, there is a break-before-make interval from time t6 to time t10.

Also, from time t2, when control voltage CTRL2 turns current source 424 on, to time t4, when control voltage CTRL2 turns current source 424 off, may be referred to as a current source on time interval. Similarly, from time t7, when control voltage CTRL1 turns current source 422 on, to time t9, when control voltage CTRL1 turns current source 422 off, may also be referred to as a current source on time interval.

According to the embodiment of FIG. 6A, the AC zero crossings (i.e., times t0a, t3, t8) occur during a break-before-make interval (e.g., while switch S2 and switch S3 are off) and while a current source (e.g., current source 422 and/or current source 424) is on (conducting).

Using current source 424 to provide a current (e.g., 10mA) as the AC input voltage transitions from a positive half cycle to a negative half cycle may advantageously reduce the rate of change (time derivative) of voltage Vacn. For instance, as illustrated, voltage Vacn (waveform 608) exhibits a controlled slope (i.e., a controlled and/or fixed slew rate) from time t2 to time t4; and by controlling voltage Vacn in this manner, EMI may be reduced.

Also, according to the teachings herein, gate drive signal G3 may turn switch S3 off at time t6 during the negative half cycle of AC input voltage Vac. At time t7, after time t6, control voltage CTRL1 (waveform 606) is exerted high to turn current source 422 on. Current source 422 may provide a fixed current (e.g., ten milliamps (10mA)) from time t7 to time t9. Next at time t8 (an AC zero crossing) switch S3 is blocking (i.e., in the off state) and current source 422 conducts current (e.g., 10mA) such that current is provided (sinked) at node Nacn (see, e.g., FIG. 4A-4B). Then at time t9, after the AC zero crossing (time t8), control voltage CTRL1 is exerted low to turn current source 422 off; and at time t10, during a positive half cycle, gate signal G2 may turn switch S2 on.

From time t6, when gate drive signal G3 turns switch S3 off, to time t10, when gate signal G2 turns switch S2 on, may also be referred to as a break-before-make interval. During break-before-make interval from time t6 to time t10, both switch s2 and switch s3 are blocking (off).

Using current source 422 to provide a current (e.g., 10mA) as the AC input voltage transitions from a negative half cycle to a positive half cycle may advantageously reduce the rate of change (time derivative) of voltage Vacn. For instance, as illustrated, voltage Vacn (waveform 608) exhibits a controlled slope (i.e., a controlled and/or fixed slew rate) from time t7 to time t9; and by controlling voltage Vacn in this manner, EMI may be reduced.

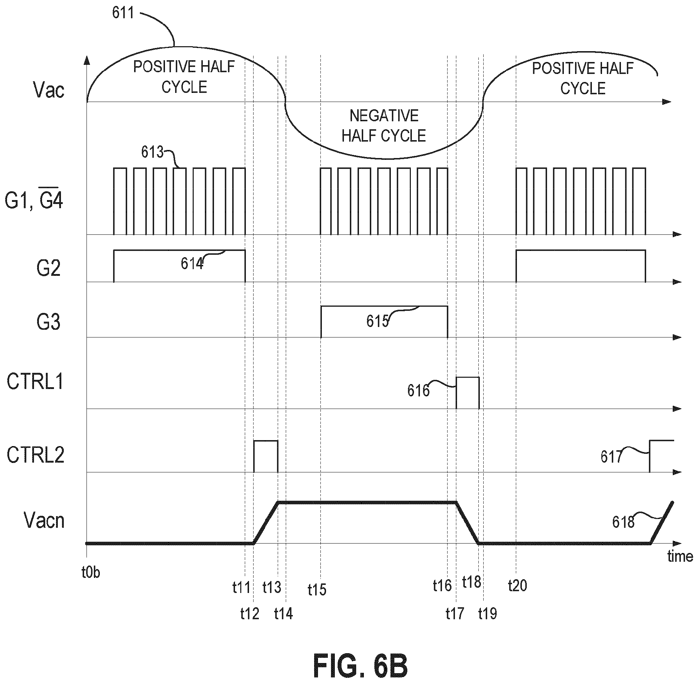

Although FIG. 6A illustrates waveforms 601-608 for a configuration whereby current source 424 is on from time t2 to time t4 and current source 422 is on from time t7 to time t9, other configurations are possible. For instance, FIG. 6B-6E show embodiments whereby the current sources 422, 424 are blocking (off) at AC zero crossings.

**FIG. 6B** illustrates waveforms 611, 613-618 respectively of AC input voltage Vac, gate drive signal G1, gate drive signal G2, gate drive signal G3, control voltage CTRL1, control voltage CTRL2, voltage Vacn according to an embodiment of the present disclosure. An AC zero crossing occurs at time t0b, time t14, and time t19. AC input voltage Vac (waveform 611) exhibits a positive half cycle between time t0b and time t14, a negative half cycle between time t14 and time t19, and another positive half cycle starting at time t19.

Like waveform 603, waveform 613, corresponding with gate drive signal G1, may be drawn with a fixed number of pulses scaled for clarity and not necessarily for accuracy; and like waveform 603, waveform 613 may also correspond with the inverse of gate drive signal G4.

Also, during the positive half cycle, gate drive signal G2 (waveform 614) exhibits a single pulse (i.e., turns on and off once). During the negative half cycle, gate drive signal G3 (waveform 615) exhibits a single pulse (i.e., turns on and off once).

Thus, the control of leg 406 with gate drive signals G2, G3 may be at the same frequency as AC input voltage Vac; and the control of leg 220 with gate drive signals G1, G4 may be at a frequency higher than that of leg 406.

According to the teachings herein gate drive signal G2 may turn switch S2 off at time t11 during the positive half cycle of AC input voltage Vac. At time t12, after time t11, control voltage CTRL2 (waveform 617) is exerted high to turn current source 424 on. Current source 424 may provide a fixed current (e.g., ten milliamps (10mA)) from time t12 to time t13. Next at time t14 (an AC zero crossing) switch S2 is blocking (i.e., in the off state) and current source 424 is blocking. Then at time t13, prior to the AC zero crossing (time t14) control voltage CTRL2 is exerted low to turn current source 424 off; and at time t15, during a negative half cycle, gate signal G3 may turn switch S3 on.

From time t11, when gate drive signal G2 turns switch S2 off, to time t15, when gate signal G3 turns switch S3 on, may be referred to as a break-before-make interval. During break-before-make interval from time t11 to time t15, both switch s2 and switch s3 are blocking (off). Similarly, there is a break-before-make interval from time t16 to time t20.

Also, from time t12, when control voltage CTRL2 turns current source 424 on, to time t13, when control voltage CTRL2 turns current source 424 off may be referred to as a current source on time interval; and from time t17, when control voltage CTRL1 turns current source 422 on, to time t18, when control voltage CTRL1 turns current source 422 off, may also be referred to as a current source on time interval.

According to the embodiment of FIG. 6B, the AC zero crossings (i.e., times t0b, t14, t19) occur during a break-before-make interval (e.g., while switch S2 and switch S3 are off) and while a current source (e.g., current source 422 and/or current source 424) is off (blocking).

Using current source 424 to provide a current (e.g., 10mA) in advance of (prior to) the AC zero crossing at time t14 may advantageously reduce the rate of change (time derivative) of voltage Vacn. For instance, as illustrated, voltage Vacn (waveform 618) exhibits a controlled slope (i.e., a controlled and/or fixed slew rate) from time t12 to time t13; and by controlling voltage Vacn in this manner, EMI may be reduced.

Also, according to the teachings herein, gate drive signal G3 may turn switch S3 off at time t16 during the negative half cycle of AC input voltage Vac. At time t17, after time t16, control voltage CTRL1 (waveform 616) is exerted high to turn current source 422 on. Current source 422 may provide a fixed current (e.g., ten milliamps (10mA)) from time t17 to time t18. Next at time t19 (an AC zero crossing) switch S3 is blocking (i.e., in the off state) and current source 422 is off (blocking). Then at time t18, prior to the AC zero crossing (time t19) control voltage CTRL1 is exerted low to turn current source 422 off; and at time t20, during a positive half cycle, gate signal G2 may turn switch S2 on.

From time t16, when gate drive signal G3 turns switch S3 off, to time t20, when gate signal G2 turns switch S2 on, may also be referred to as a break-before-make interval. During break-before-make interval from time t16 to time t20, both switch s2 and switch s3 are blocking (off).

Using current source 422 to provide a current (e.g., 10mA) prior to the AC zero crossing at time t19 may advantageously reduce the rate of change (time derivative) of voltage Vacn. For instance, as illustrated, voltage Vacn (waveform 618) exhibits a controlled slope (i.e., a controlled and/or fixed slew rate) from time t17 to time t18; and by controlling voltage Vacn in this manner, EMI may be reduced.

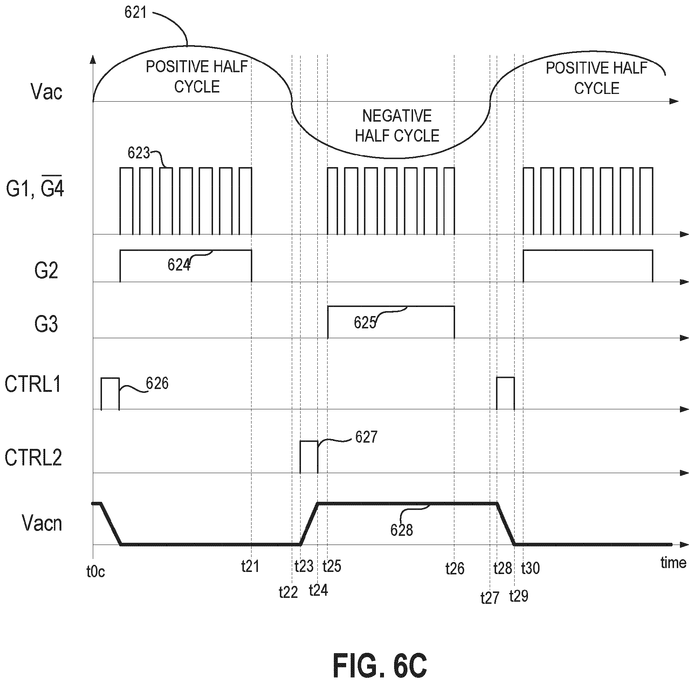

**FIG. 6C** illustrates waveforms 621, 623-628 respectively of AC input voltage Vac, gate drive signal G1, gate drive signal G2, gate drive signal G3, control voltage CTRL1, control voltage CTRL2, voltage Vacn according to an embodiment of the present disclosure. An AC zero crossing occurs at time t0c, time t22, and time t27. AC input voltage Vac (waveform 621) exhibits a positive half cycle between time t0c and time t22, a negative half cycle between time t22 and time t27, and another positive half cycle starting at time t27.

Like waveform 603, waveform 623, corresponding with gate drive signal G1, may be drawn with a fixed number of pulses scaled for clarity and not necessarily for accuracy; and like waveform 603, waveform 623 may also correspond with the inverse of gate drive signal G4.

Also, during the positive half cycle, gate drive signal G2 (waveform 624) exhibits a single pulse (i.e., turns on and off once). During the negative half cycle, gate drive signal G3 (waveform 625) exhibits a single pulse (i.e., turns on and off once).

Thus, the control of leg 406 with gate drive signals G2, G3 may be at the same frequency as AC input voltage Vac; and the control of leg 220 with gate drive signals G1, G4 may be at a frequency higher than that of leg 406.

According to the teachings herein gate drive signal G2 may turn switch S2 off at time t21 during the positive half cycle of AC input voltage Vac. At time t23, after the AC zero crossing at time t22, control voltage CTRL2 (waveform 627) is exerted high to turn current source 424 on. Current source 424 may provide a fixed current (e.g., ten milliamps (10mA)) from time t23 to time t24. Next at time t22 (an AC zero crossing) switch S2 is blocking (i.e., in the off state) and current source 424 is blocking. Then at time t24 control voltage CTRL2 is exerted low to turn current source 424 off; and at time t25, during a negative half cycle, gate signal G3 may turn switch S3 on.

From time t21, when gate drive signal G2 turns switch S2 off, to time t25, when gate signal G3 turns switch S3 on, may be referred to as a break-before-make interval. During break-before-make interval from time t21 to time t25, both switch s2 and switch s3 are blocking (off). Similarly, there is a break-before-make interval from time t26 to time t30.

Also, from time t23, when control voltage CTRL2 turns current source 424 on, to time t24, when control voltage CTRL2 turns current source 424 off, may be referred to as a current source on time interval; and from time t28, when control voltage CTRL1 turns current source 422 on, to time t29, when control voltage CTRL1 turns current source 422 off, may also be referred to as a current source on time interval.

According to the embodiment of FIG. 6C, the AC zero crossings (i.e., times t0c, t22, t27) occur during a break-before-make interval (e.g., while switch S2 and switch S3 are off) and while a current source (e.g., current source 422 and/or current source 424) is off (blocking).

Using current source 424 to provide a current (e.g., 10mA) after the AC zero crossing at time t22 may advantageously reduce the rate of change (time derivative) of voltage Vacn. For instance, as illustrated, voltage Vacn (waveform 628) exhibits a controlled slope (i.e., a controlled and/or fixed slew rate) from time t23 to time t24; and by controlling voltage Vacn in this manner, EMI may be reduced.

Also, according to the teachings herein, gate drive signal G3 may turn switch S3 off at time t26 during the negative half cycle of AC input voltage Vac. At time t28, after the AC zero crossing at time t27, control voltage CTRL1 (waveform 626) is exerted high to turn current source 422 on. Current source 422 may provide a fixed current (e.g., ten milliamps (10mA)) from time t28 to time t29. Next at time t27 (an AC zero crossing) switch S3 is blocking (i.e., in the off state) and current source 422 is off (blocking). Then at time t29 control voltage CTRL1 is exerted low to turn current source 422 off; and at time t30, during a positive half cycle, gate signal G2 may turn switch S2 on.

From time t26, when gate drive signal G3 turns switch S3 off, to time t30, when gate signal G2 turns switch S2 on, may also be referred to as a break-before-make interval. During break-before-make interval from time t26 to time t30, both switch s2 and switch s3 are blocking (off).

Using current source 422 to provide a current (e.g., 10mA) after the AC zero crossing at time t27 may advantageously reduce the rate of change (time derivative) of voltage Vacn. For instance, as illustrated, voltage Vacn (waveform 628) exhibits a controlled slope (i.e., a controlled and/or fixed slew rate) from time t28 to time t29; and by controlling voltage Vacn in this manner, EMI may be reduced.

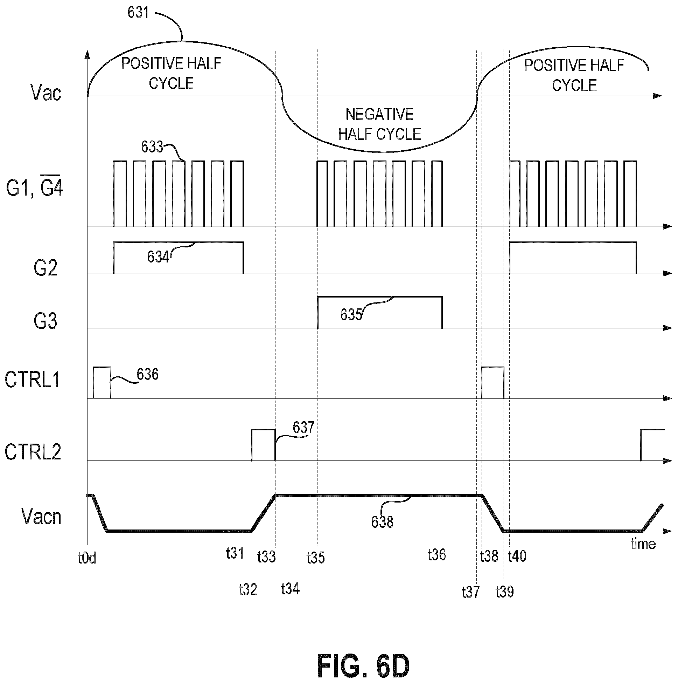

**FIG. 6D** illustrates waveforms 631, 633-638 respectively of AC input voltage Vac, gate drive signal G1, gate drive signal G2, gate drive signal G3, control voltage CTRL1, control voltage CTRL2, voltage Vacn according to an embodiment of the present disclosure. An AC zero crossing occurs at time t0d, time t34, and time t37. AC input voltage Vac (waveform 631) exhibits a positive half cycle between time t0d and time t34, a negative half cycle between time t34 and time t37, and another positive half cycle starting at time t37.

Like waveform 603, waveform 633, corresponding with gate drive signal G1, may be drawn with a fixed number of pulses scaled for clarity and not necessarily for accuracy; and like waveform 603, waveform 633 may also correspond with the inverse of gate drive signal G4.

Also, during the positive half cycle, gate drive signal G2 (waveform 634) exhibits a single pulse (i.e., turns on and off once). During the negative half cycle, gate drive signal G3 (waveform 635) exhibits a single pulse (i.e., turns on and off once).

Thus, the control of leg 406 with gate drive signals G2, G3 may be at the same frequency as AC input voltage Vac; and the control of leg 220 with gate drive signals G1, G4 may be at a frequency higher than that of leg 406.

According to the teachings herein gate drive signal G2 may turn switch S2 off at time t31 during the positive half cycle of AC input voltage Vac. Control voltage CTRL2 (waveform 637) is exerted high from time t32 to time t33. Accordingly, current source 424 may provide a fixed current (e.g., ten milliamps (10mA)) from time t32 to time t33. At time t34 (an AC zero crossing) switch S2 is blocking (i.e., in the off state) and current source 424 is blocking; and at time t35, during a negative half cycle, gate signal G3 may turn switch S3 on.

From time t31, when gate drive signal G2 turns switch S2 off, to time t35, when gate signal G3 turns switch S3 on, may be referred to as a break-before-make interval. During break-before-make interval from time t31 to time t35, both switch s2 and switch s3 are blocking (off). Similarly, there is a break-before-make interval from time t36 to time t40.

Also, from time t32, when control voltage CTRL2 turns current source 424 on, to time t33, when control voltage CTRL2 turns current source 424 off, may be referred to as a current source on time interval; and from time t38, when control voltage CTRL1 turns current source 422 on, to time t39, when control voltage CTRL1 turns current source 422 off, may also be referred to as a current source on time interval.

According to the embodiment of FIG. 6D, the AC zero crossings (i.e., times t0d, t34, t37) occur during a break-before-make interval (e.g., while switch S2 and switch S3 are off) and while a current source (e.g., current source 422 and/or current source 424) is off (blocking).

Using current source 424 to provide a current (e.g., 10mA) prior to the AC zero crossing at time t34 may advantageously reduce the rate of change (time derivative) of voltage Vacn. For instance, as illustrated, voltage Vacn (waveform 638) exhibits a controlled slope (i.e., a controlled and/or fixed slew rate) from time t32 to time t33; and by controlling voltage Vacn in this manner, EMI may be reduced.

Also, according to the teachings herein, gate drive signal G3 may turn switch S3 off at time t36 during the negative half cycle of AC input voltage Vac. At time t38, after the AC zero crossing at time t37, control voltage CTRL1 (waveform 636) is exerted high to turn current source 422 on. Current source 422 may provide a fixed current (e.g., ten milliamps (10mA)) from time t38 to time t39. At time t37 (an AC zero crossing) switch S3 is blocking (i.e., in the off state) and current source 422 is off (blocking); and at time t39 control voltage CTRL1 is exerted low to turn current source 422 off. Then at time t40, during a positive half cycle, gate signal G2 may turn switch S2 on.

From time t36, when gate drive signal G3 turns switch S3 off, to time t40, when gate signal G2 turns switch S2 on, may also be referred to as a break-before-make interval. During break-before-make interval from time t36 to time t40, both switch s2 and switch s3 are blocking (off).

Using current source 422 to provide a current (e.g., 10mA) after the AC zero crossing at time t37 may advantageously reduce the rate of change (time derivative) of voltage Vacn. For instance, as illustrated, voltage Vacn (waveform 638) exhibits a controlled slope (i.e., a controlled and/or fixed slew rate) from time t38 to time t39; and by controlling voltage Vacn in this manner, EMI may be advantageously reduced.

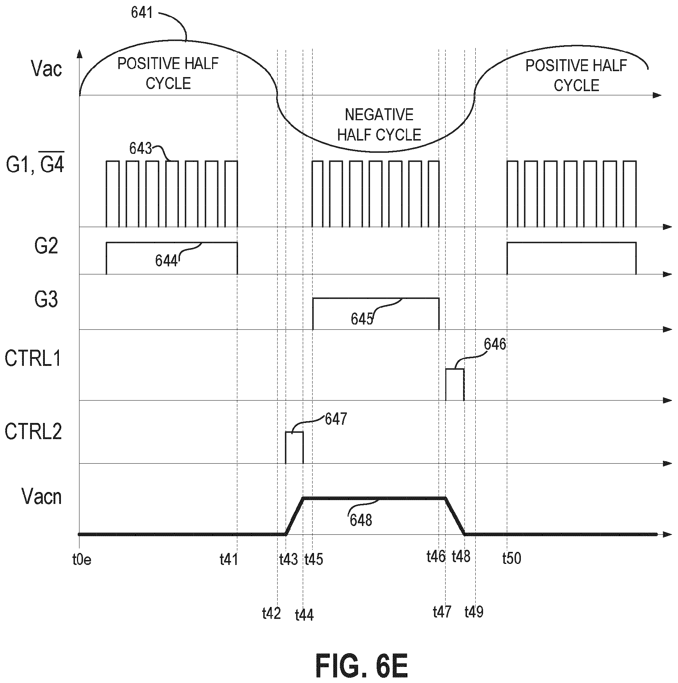

**FIG. 6E** illustrates waveforms 641, 643-648 respectively of AC input voltage Vac, gate drive signal G1, gate drive signal G2, gate drive signal G3, control voltage CTRL1, control voltage CTRL2, voltage Vacn according to an embodiment of the present disclosure. An AC zero crossing occurs at time t0e, time t42, and time t49. AC input voltage Vac (waveform 641) exhibits a positive half cycle between time t0e and time t42, a negative half cycle between time t42 and time t49, and another positive half cycle starting at time t49.

Like waveform 603, waveform 643, corresponding with gate drive signal G1, may be drawn with a fixed number of pulses scaled for clarity and not necessarily for accuracy; and like waveform 603, waveform 643 may also correspond with the inverse of gate drive signal G4.

Also, during the positive half cycle, gate drive signal G2 (waveform 644) exhibits a single pulse (i.e., turns on and off once). During the negative half cycle, gate drive signal G3 (waveform 645) exhibits a single pulse (i.e., turns on and off once).

Thus, the control of leg 406 with gate drive signals G2, G3 may be at the same frequency as AC input voltage Vac; and the control of leg 220 with gate drive signals G1, G4 may be at a frequency higher than that of leg 406.

According to the teachings herein gate drive signal G2 may turn switch S2 off at time t41 during the positive half cycle of AC input voltage Vac. Control voltage CTRL2 (waveform 647) is exerted high from time t43 to time t44. Accordingly, current source 424 may provide a fixed current (e.g., ten milliamps (10mA)) from time t43 to time t44. At time t42 (an AC zero crossing) switch S2 is blocking (i.e., in the off state) and current source 424 is blocking; and at time t45, during a negative half cycle, gate signal G3 may turn switch S3 on.

From time t41, when gate drive signal G2 turns switch S2 off, to time t45, when gate signal G3 turns switch S3 on, may be referred to as a break-before-make interval. During break-before-make interval from time t41 to time t45, both switch s2 and switch s3 are blocking (off). Similarly, there is a break-before-make interval from time t46 to time t50.

Also, from time t43, when control voltage CTRL2 turns current source 424 on, to time t44, when control voltage CTRL2 turns current source 424 off, may be referred to as a current source on time interval; and from time t47, when control voltage CTRL1 turns current source 422 on, to time t48, when control voltage CTRL1 turns current source 422 off, may also be referred to as a current source on time interval.

According to the embodiment of FIG. 6E, the AC zero crossings (i.e., times t0e, t42, t49) occur during a break-before-make interval (e.g., while switch S2 and switch S3 are off) and while a current source (e.g., current source 422 and/or current source 424) is off (blocking).

Using current source 424 to provide a current (e.g., 10mA) after the AC zero crossing at time t42 may advantageously reduce the rate of change (time derivative) of voltage Vacn. For instance, as illustrated, voltage Vacn (waveform 648) exhibits a controlled slope (i.e., a controlled and/or fixed slew rate) from time t43 to time t44; and by controlling voltage Vacn in this manner, EMI may be reduced.

Also, according to the teachings herein, gate drive signal G3 may turn switch S3 off at time t46 during the negative half cycle of AC input voltage Vac. From time t47 to time t48, control voltage CTRL1 (waveform 646) is exerted high to turn current source 422; and while control voltage CTRL1 is exerted high, current source 422 may provide a fixed current (e.g., ten milliamps (10mA)). At time t49 (an AC zero crossing) switch S3 is blocking (i.e., in the off state) and current source 422 is off (blocking); and at time t50, during a positive half cycle, gate signal G2 may turn switch S2 on.

From time t46, when gate drive signal G3 turns switch S3 off, to time t50, when gate signal G2 turns switch S2 on, may also be referred to as a break-before-make interval. During break-before-make interval from time t46 to time t50, both switch s2 and switch s3 are blocking (off).

Using current source 422 to provide a current (e.g., 10mA) before the AC zero crossing at time t49 may advantageously reduce the rate of change (time derivative) of voltage Vacn. For instance, as illustrated, voltage Vacn (waveform 648) exhibits a controlled slope (i.e., a controlled and/or fixed slew rate) from time t47 to time t48; and by controlling voltage Vacn in this manner, EMI may be reduced.

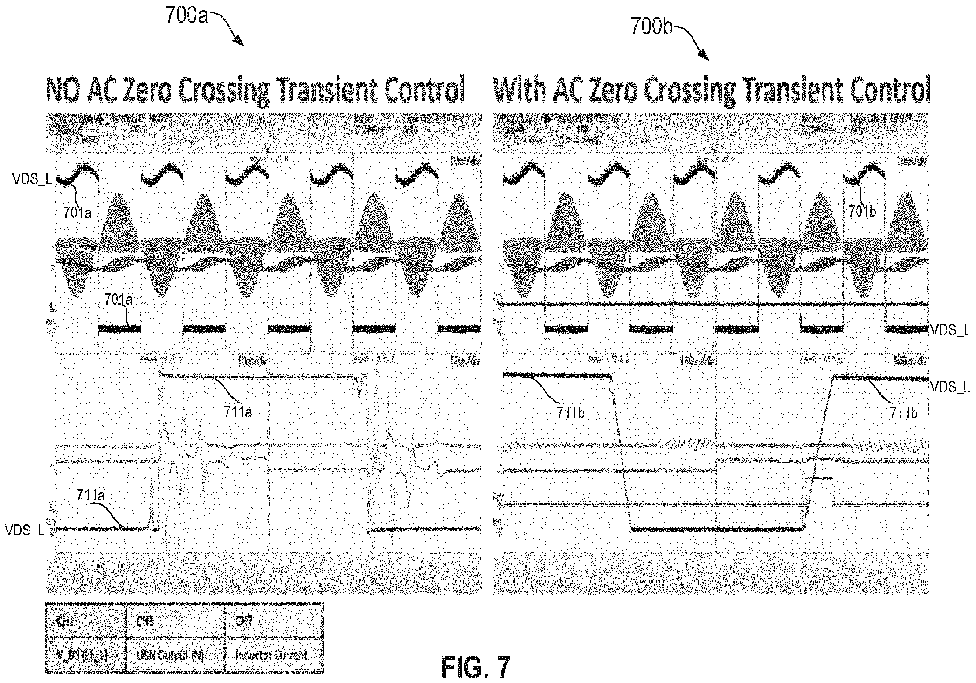

**FIG. 7** compares experimental waveforms 700a of a bridgeless PFC circuit 200, without current sources 422, 424, to experimental waveforms 700b of a bridgeless PFC circuit 400, 450 using current sources 422, 424. Experimental waveform 700a include waveforms 701a, 711a, which may correspond with voltage VDS_L of bridgeless PFC circuit 200. As illustrated, waveform 711a depicts an expanded view of waveform 701a (i.e., shows a zoom-in view of waveform 701a). Experimental waveforms 700b include waveforms 701b, 711b, which may correspond with voltage VDS_L of bridgeless PFC circuit 400 and/or PFC circuit 450 using current sources 422, 424 according to the teachings herein. As illustrated, waveform 711b shows an expanded view of waveform 701b (i.e., shows a zoom-in view of waveform 701b).

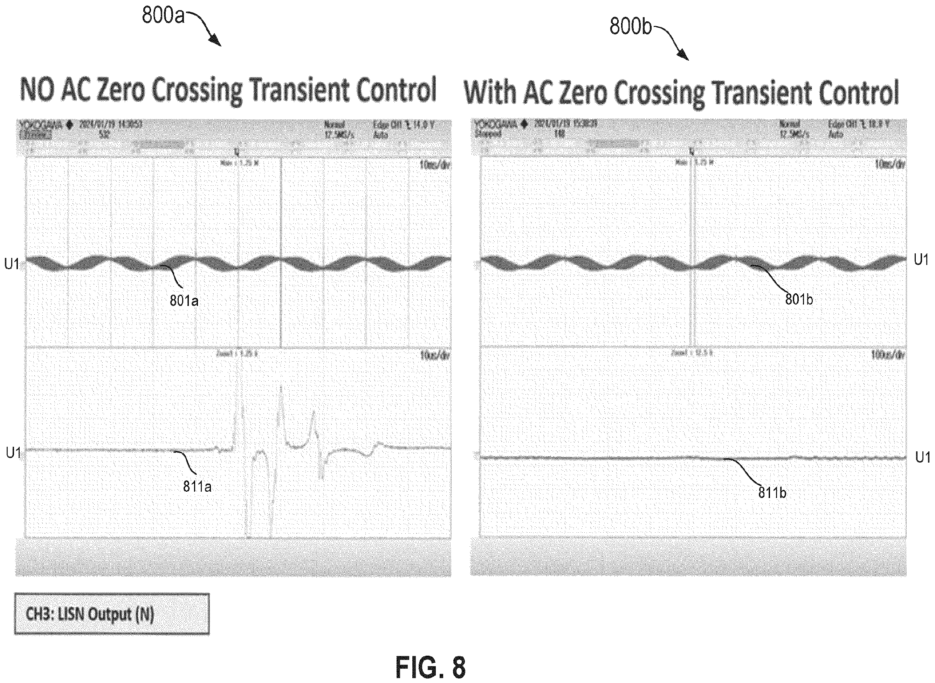

In support of the teachings herein, waveforms 701b, 711b exhibit a more gradual variation (i.e., show less time rate of change) relative to waveforms 701a, 711a; and as shown in FIG. 8, this may improve (i.e., reduce) EMI.

**FIG. 8** compares electromagnetic emissions waveforms 800a corresponding with experimental waveforms 700a to electromagnetic emissions waveforms 800b corresponding with experimental waveforms 700b. Electromagnetic emissions waveforms 800a include waveforms 801a, 811a measured using a line impedance stabilization network (LISN). Waveform 811a shows an expanded view of waveform 801a (i.e., shows a zoom-in view of waveform 801a). Waveforms 801a, 811a may both correspond with an EMI emission signal U1 measured during the capture of experimental waveforms 700a. Accordingly, waveforms 801a, 811a may both correspond with an EMI emission signal U1 taken from a bridgeless PFC circuit 200, without current sources 422, 424.

Electromagnetic emissions waveforms 800b include waveforms 801b, 811b measured using a line impedance stabilization network (LISN). Waveform 811b shows an expanded view of waveform 801b (i.e., shows a zoom-in view of waveform 801b). Waveforms 801b, 811b may both correspond with an EMI emission signal U1 measured during the capture of experimental waveforms 700b. Accordingly, waveforms 801b, 811b may both correspond with an EMI emission signal U1 taken from a bridgeless PFC circuit 400, 450 using current sources 422, 424 according to the teachings herein. In support of the teachings herein, waveforms 801b, 811b demonstrate improved (reduced) EMI as compared to waveforms 801a, 811a.

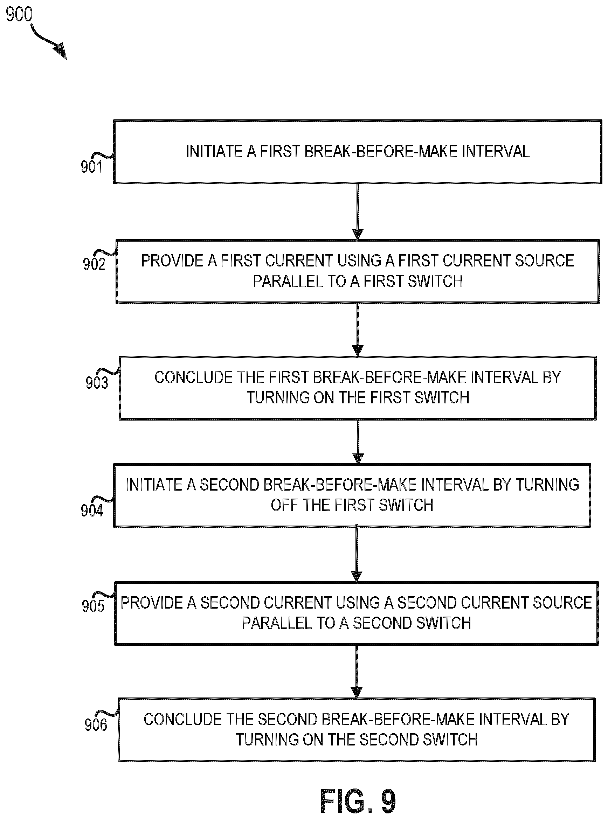

**FIG. 9** illustrates a conceptual flow diagram 900 of a method for reducing EMI in a bridgeless PFC converter 400, 450 according to the teachings herein. With reference to waveforms 601-608 and to bridgeless PFC circuit 400, 450, step 901 may correspond with initiating a first break-before-make interval (e.g., break-before-make interval from time t1 to time t5). Step 902 may correspond with providing a first current (e.g., 10mA) using a first current source (e.g., current source 424) parallel to a first switch (e.g., switch S3). Step 903 may correspond with concluding the first break-before-make interval by turning on the first switch (e.g., by turning on switch S3 at time t5). Step 904 may correspond with initiating a second break-before-make interval (e.g., break-before-make interval from time t6 to time t10) by turning off the first switch (e.g., by turning off switch S3 at time t6). Step 905 may correspond with providing a second current (e.g., 10mA) using a second current source (e.g., current source 422) parallel to a second switch (e.g., switch S2); and step 906 may correspond with concluding the second break-before-make interval by turning on the second switch (e.g., by turning on switch S2 at time t10).

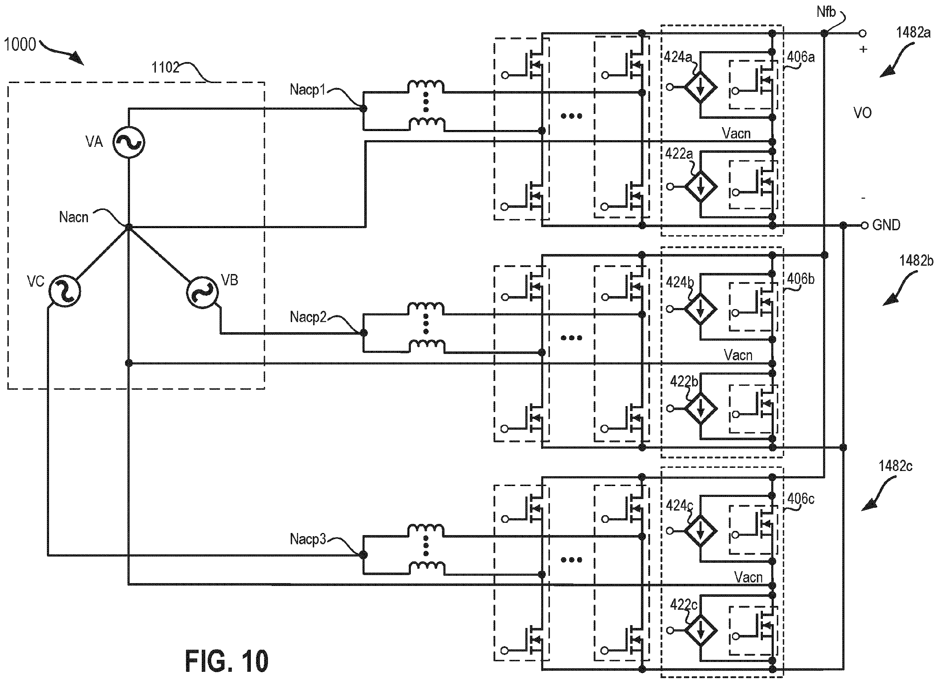

**FIG. 10** illustrates a power converter 1000 according to an embodiment of the present disclosure. Power converter 1000 converts a WYE configured AC power source 1102 into regulated output power with output voltage VO between node NFB and neutral ground GND and includes bridgeless PFC circuits 1482a-c, each like multi-phase interleaved totem-pole PFC circuit 482. As shown, WYE configured AC power source 1102 provides AC voltage VA to positive input node Nacp1 of bridgeless PFC circuit 1482a, AC voltage VB to positive input node Nacp2 of bridgeless PFC circuit 1482b, and AC voltage VC to positive input node Nacp3 of bridgeless PFC circuit 1482c.

Additionally, bridgeless PFC circuit 1482a includes a low frequency leg 406a. Bridgeless PFC circuit 1482b includes a low frequency leg 406b; and bridgeless PFC circuit 1482c includes a low frequency leg 406c. Low frequency leg 406a includes current sources 422a, 424a. Low frequency leg 406b includes current sources 422b, 424b; and low frequency leg 406c includes current sources 422c, 424c.

Also, as illustrated, the negative input node Nacn of WYE configured AC power source 1102 is electrically coupled to each of the low frequency legs 406a-c. According to the teachings herein, during operation current sources 422a-c, 424a-c may be used like current sources 422, 424 of bridgeless PFC circuit 400 to reduce the rate of change (i.e., the slew rate) of voltage Vacn at negative input node Nacn; and as a result, EMI may be improved (i.e., reduced).

### CONCLUSION

The above description of illustrated examples of the present disclosure, including what is described in the Abstract, is not intended to be exhaustive or to be limitation to the precise forms disclosed. While specific embodiments of, and examples for a bridgeless power factor correction (PFC) circuit for reducing electromagnetic interference (EMI) are described herein for illustrative purposes, various equivalent modifications are possible without departing from the broader spirit and scope of the present disclosure. Indeed, it is appreciated that the specific example voltages, currents, frequencies, power range values, times, etc., are provided for explanation purposes and that other values may also be employed in other embodiments and examples in accordance with the teachings herein.

The foregoing description may refer to elements or features as being "connected" or "coupled" together. As used herein, unless expressly stated otherwise, "connected" or "electrically connected" means that one element/feature is directly or indirectly connected to another element/feature, and not necessarily mechanically. Likewise, unless expressly stated otherwise, "coupled" or "electrically coupled" means that one element/feature is directly or indirectly coupled to another element/feature, and not necessarily mechanically. Thus, although the various schematics shown in the figures depict example arrangements of elements and components, additional intervening elements, devices, features, or components may be present in an actual embodiment (assuming that the functionality of the depicted circuits is not adversely affected). Additionally, components may be excluded for the sake of providing an unencumbered illustration of the teachings herein.

Moreover, conditional language used herein, such as, among others, "can," "could," "might," "may," "e.g.," "for example," "such as" and the like, unless specifically stated otherwise or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding whether these features, elements and/or states are included or are to be performed in any particular embodiment.

While certain embodiments have been described, these embodiments have been presented by way of example only and are not intended to limit the scope of the disclosure. Indeed, the novel apparatus, methods, and systems described herein may be embodied in a variety of other forms; furthermore, various omissions, substitutions, and changes in the form of the methods and systems described herein may be made without departing from the spirit of the disclosure. For example, while the disclosed embodiments are presented in a given arrangement, alternative embodiments may perform similar functionalities with different components and/or circuit topologies, and some elements may be deleted, moved, added, subdivided, combined, and/or modified. Each of these elements may be implemented in a variety of different ways. Any suitable combination of the elements and acts of the various embodiments described above can be combined to provide further embodiments. Accordingly, the scope of the present invention is defined only by reference to the appended claims.

Although the claims presented here are in single dependency format for filing at the USPTO, it is to be understood that any claim may depend on any preceding claim of the same type except when that is clearly not technically feasible.

### EMBODIMENTS

Although the present invention is defined in the attached claims, it should be understood that the present invention can also (alternatively) be defined in accordance with the following embodiments:
1. A bridgeless power factor correction (PFC) circuit configured to convert an alternating current (AC) input voltage into a regulated direct current (DC) voltage, the bridgeless PFC circuit comprising:
   a first leg comprising a first switch and a first current source, the first current source electrically coupled in parallel with the first switch;
   wherein the first switch is configured to block and the first current source is configured to conduct during a first AC zero crossing of the AC input voltage.
2. The bridgeless PFC circuit of embodiment 1, wherein the bridgeless PFC circuit is a totem pole PFC circuit.
3. The bridgeless PFC circuit of any preceding embodiment, wherein the first switch is an N-channel field effect transistor (NFET).
4. The bridgeless PFC circuit of any preceding embodiment, wherein the first current source comprises:
   an enhancement mode transistor;
   a depletion mode transistor; and
   a resistor.
5. The bridgeless PFC circuit of any preceding embodiment, wherein the first AC zero crossing occurs during a transition from a positive half cycle to a negative half cycle.
6. The bridgeless PFC circuit of any preceding embodiment, wherein the first AC zero crossing occurs during a transition from a negative half cycle to a positive half cycle.
7. The bridgeless PFC circuit of any preceding embodiment, wherein the first switch is configured to turn off at a first time prior to the first AC zero crossing.
8. The bridgeless PFC circuit of embodiment 7, wherein the first current source is configured to turn on after the first time.
9. The bridgeless PFC circuit of any preceding embodiment, wherein the first leg further comprises:
   a second switch and a second current source, the second current source electrically coupled in parallel with the second switch;
   wherein the second switch is configured to block and the second current source is configured to conduct during a second AC zero crossing of the AC input voltage.
10. The bridgeless PFC circuit of embodiment 9, wherein the second AC zero crossing occurs during a transition from a negative half cycle to a positive half cycle.
11. The bridgeless PFC circuit of embodiment 9, wherein the second AC zero crossing occurs during a transition from a positive half cycle to a negative half cycle.
12. A bridgeless power factor correction (PFC) circuit configured to receive an alternating current (AC) input voltage and comprising:
   a first leg comprising a first switch and a first current source; and
   a gate-logic controller comprising an alternating current (AC) zero cross controller and
   configured to provide a first gate signal to the first switch and a first control voltage to the first current source such that the first switch is off and the first current source conducts a first current during a first AC zero crossing of the AC input voltage.
13. The bridgeless PFC circuit of embodiment 12, wherein the first leg further comprises:
   a second switch and a second current source,
   wherein the gate-logic controller is configured to provide a second gate signal to the second switch and a second control voltage to the second current source such that the second switch is off and the second current source conducts a second current during a second AC zero crossing of the AC input voltage.
14. The bridgeless PFC circuit of embodiment 13, wherein the first switch comprises a first N-channel field effect transistor (NFET) and the second switch comprises a second NFET.
15. The bridgeless PFC circuit of embodiment 14, wherein the AC zero cross controller is configured to provide the first control voltage and the second control voltage based, at least in part, on a drain to source voltage of the first NFET and a drain to source voltage of the second NFET.
16. The bridgeless PFC circuit of embodiment 13, further comprising:
   a second leg comprising a third switch and a fourth switch.
17. The bridgeless PFC circuit of embodiment 16, wherein the third switch comprises an N-channel field effect transistor (NFET).
18. The bridgeless PFC circuit of embodiment 16, wherein the third switch comprises a diode.
19. The bridgeless PFC circuit of embodiment 16, wherein the gate-logic controller is configured to provide a third gate signal to the third switch and a fourth gate signal to the fourth switch.
20. The bridgeless PFC circuit of embodiment 19, wherein the gate-logic controller is configured to provide the first gate signal, the second gate signal, the third gate signal, and the fourth gate signal such that the bridgeless PFC circuit converts the AC input voltage into a regulated direct current (DC) voltage with power factor correction.
21. A bridgeless power factor correction (PFC) circuit configured to convert an alternating current (AC) input voltage into a regulated direct current (DC) voltage, the bridgeless PFC circuit comprising:
   a first leg comprising a first switch and a first current source, the first current source electrically coupled in parallel with the first switch.
22. The bridgeless PFC circuit of embodiment 21, wherein the first leg further comprises:
   a second switch and a second current source, the second current source electrically coupled in parallel with the second switch.
23. The bridgeless PFC circuit of embodiment 22, wherein the first switch comprises a first N-channel field effect transistor (NFET), and the second switch comprises a second NFET.
24. The bridgeless PFC circuit of embodiment 22, wherein at least one of the first switch and the second switch comprises a diode.
25. The bridgeless PFC circuit of embodiment 22, wherein the first switch and the second switch block during a break-before-make interval.
26. The bridgeless PFC circuit of embodiment 25, wherein the first current source conducts during at least part of the break-before-make interval.
27. The bridgeless PFC circuit of embodiment 26, wherein the first current source conducts during an AC zero crossing of the AC input voltage.
28. The bridgeless PFC circuit of embodiment 25, wherein the second current source conducts during at least part of the break-before-make interval.
29. The bridgeless PFC circuit of embodiment 28, wherein the second current source conducts during an AC zero crossing of the AC input voltage.
30. The bridgeless PFC circuit of embodiment 25, wherein the break-before-make interval occurs during a transition from a positive half cycle to a negative half cycle of the AC input voltage.
31. The bridgeless PFC circuit of embodiment 25, wherein the break-before-make interval occurs during a transition from a negative half cycle to a positive half cycle of the AC input voltage.
32. The bridgeless PFC circuit of embodiment 25, wherein an AC zero crossing of the AC input voltage occurs during the break-before-make interval.
33. A method of reducing electromagnetic interference (EMI) in a bridgeless power factor correction (PFC) circuit during an AC cycle of an AC input voltage comprising:
   initiating a first break-before-make interval;
   providing a first current using a first current source parallel to a first switch;
   concluding the first break-before-make interval by turning on the first switch;
   initiating a second break-before-make interval by turning off the first switch;
   providing a second current using a second current source parallel to a second switch; and
   concluding the second break-before-make interval by turning on the second switch.
34. The method of embodiment 33, wherein initiating the first break-before-make interval comprises:
   initiating the first break-before-make interval by turning off the second switch.
35. The method of embodiment 33, wherein providing the first current using the first current source parallel to the first switch comprises:
   turning on the first current source before initiating the first break-before-make interval.
36. The method of embodiment 33, wherein providing the first current using the first current source parallel to the first switch comprises:
   turning on the first current source after initiating the first break-before-make interval.
37. The method of embodiment 33, wherein providing the first current using the first current source parallel to the first switch comprises:
   turning off the first current source before concluding the first break-before-make interval.
38. The method of embodiment 33, wherein providing the first current using the first current source parallel to the first switch comprises:
   turning off the first current source after concluding the first break-before-make interval.
39. The method of embodiment 33, wherein providing the second current using the second current source parallel to the second switch comprises:
   turning on the second current source before initiating the second break-before-make interval.
40. The method of embodiment 33, wherein providing the second current using the second current source parallel to the second switch comprises:
   turning on the second current source after initiating the second break-before-make interval.
41. The method of embodiment 33, wherein providing the second current using the second current source parallel to the second switch comprises:
   turning off the second current source before concluding the second break-before-make interval.
42. The method of embodiment 33, wherein providing the second current using the second current source parallel to the second switch comprises:
   turning off the second current source after concluding the second break-before-make interval.
43. The method of embodiment 33, wherein the bridgeless PFC circuit is a totem pole PFC circuit.
44. The method of embodiment 33, wherein the first switch comprises a first NFET, and the second switch comprises a second NFET.
45. The method of embodiment 33, wherein the bridgeless PFC circuit is a bridgeless interleaved PFC circuit.
46. The bridgeless PFC circuit of embodiment 21, wherein the bridgeless PFC circuit is a bridgeless interleaved totem pole PFC circuit.

## Claims

1. A bridgeless power factor correction (PFC) circuit configured to receive an alternating current (AC) input voltage and comprising:
a first leg comprising a first switch and a first current source; and
a gate-logic controller comprising an alternating current (AC) zero cross controller and configured to provide a first gate signal to the first switch and a first control voltage to the first current source such that the first switch is off and the first current source is on during a first break-before-make interval.

2. The bridgeless PFC circuit of claim 1, wherein the first leg further comprises:
a second switch and a second current source,
wherein the gate-logic controller is configured to provide a second gate signal to the second switch and a second control voltage to the second current source such that the second switch is off and the second current source is on during a second break-before-make interval.

3. The bridgeless PFC circuit of claim 2, wherein the first switch comprises a first N-channel field effect transistor (NFET) and the second switch comprises a second NFET, and
optionally wherein the AC zero cross controller is configured to provide the first control voltage and the second control voltage based, at least in part, on a drain to source voltage of the first NFET and a drain to source voltage of the second NFET.

4. The bridgeless PFC circuit of claim 2, further comprising:
a second leg comprising a third switch and a fourth switch, and
optionally wherein the third switch comprises an N-channel field effect transistor (NFET) or a diode.

5. The bridgeless PFC circuit of claim 4, wherein the gate-logic controller is configured to provide a third gate signal to the third switch and a fourth gate signal to the fourth switch, and
optionally wherein the gate-logic controller is configured to provide the first gate signal, the second gate signal, the third gate signal, and the fourth gate signal such that the bridgeless PFC circuit converts the AC input voltage into a regulated direct current (DC) voltage with power factor correction.

6. The bridgeless power factor correction (PFC) circuit of claim 1, wherein:
the first leg is a low frequency leg (406) comprising a first switch electrically coupled in parallel with a first current source.

7. The bridgeless PFC circuit of claim 6, wherein the first current source comprises:
an enhancement mode transistor;
a depletion mode transistor; and
a resistor.

8. The bridgeless PFC circuit of claim 6 or claim 7, wherein the low frequency leg further comprises:
a second switch electrically coupled in parallel with a second current source.

9. The bridgeless PFC circuit of claim 8, wherein the first switch and the second switch are configured to be off during a break-before-make period.

10. The bridgeless PFC circuit of claim 9, wherein during the break-before-make period the first current source is configured to be on and the second current source is configured to be off, and
optionally wherein the first current source is configured to be on during a zero crossing of the AC input voltage.

11. The bridgeless PFC circuit of claim 9, wherein during the break-before-make period the first current source is configured to be off and the second current source is configured to be on, and
optionally wherein the second current source is configured to be on during a zero crossing of the AC input voltage.

12. A method of reducing electromagnetic interference (EMI) in a bridgeless power factor correction (PFC) circuit during an AC cycle of an AC input voltage comprising:
initiating a first break-before-make interval;
providing a first current using a first current source parallel to a first switch;
concluding the first break-before-make interval by turning on the first switch;
initiating a second break-before-make interval by turning off the first switch;
providing a second current using a second current source parallel to a second switch; and
concluding the second break-before-make interval by turning on the second switch.

13. The method of claim 12, wherein initiating the first break-before-make interval comprises:
initiating the first break-before-make interval by turning off the second switch.

14. The method of claim 12 or claim 13, wherein providing the first current using the first current source parallel to the first switch comprises either:
turning on the first current source after initiating the first break-before-make interval; or
turning off the first current source before concluding the first break-before-make interval.

15. The method of claim 12 or claim 13, wherein providing the second current using the second current source parallel to the second switch comprises either:
turning on the second current source after initiating the second break-before-make interval; or
turning off the second current source before concluding the second break-before-make interval.

16. The bridgeless PFC circuit of any one of claims 1 to 11 or the method of any one of claims 12 to 15, wherein the bridgeless PFC circuit is a totem pole PFC circuit or a bridgeless interleaved totem pole PFC circuit.

17. The method of any one of claims 12 to claim 16, wherein the first switch comprises a first NFET, and the second switch comprises a second NFET.
